# EUROPÄISCHE PATENTSCHRIFT

(11) **EP 1 519 063 B1**
(45) Veröffentlichungstag und Bekanntmachung des Hinweises auf die Patenterteilung: **19.11.2008**
(21) Anmeldenummer: 04020478.6
(22) Anmeldetag: 28.08.2004
(51) Int. Cl.: F16D 3/16, B60K 17/22

(54) **Antriebsstrangverbindung für Fahrzeuge**
Drive train connection for vehicles
Connection de train de propulsion pour véhicules

(30) Priorität: 26.09.2003 DE 10344703
(43) Veröffentlichungstag der Anmeldung: 30.03.2005
(73) Patentinhaber: Bayerische Motoren Werke Aktiengesellschaft, 80809 München (DE)
(72) Erfinder: Schneider, Franz, 80937 München (DE)

(56) Entgegenhaltungen:
- FR-A- 2 662 757
- US-A1- 2001 016 520

## Beschreibung

Die vorliegende Erfindung betrifft eine Antriebsstrangverbindung für Fahrzeuge gemäß dem Oberbegriff des Patentanspruches 1.

Eine derartige Antriebsstrangverbindung ist aus der FR 2 662 757 bekannt.

Bei Fahrzeugen mit Hinterachsantrieb ist, wie beispielsweise in der DE 198 31 016 C2 beschrieben, das Getriebe über eine Gelenkwelle und zwei Gelenke mit dem Hinterachsgetriebe verbunden. Üblicherweise ist eines der Gelenke am hinteren Ende der Gelenkwelle angeordnet und formschlüssig mit einer Eingangswelle des Hinterachsgetriebes drehgekoppelt. Ein Abtriebselement des Gelenks ist dabei üblicherweise über eine Flanschverschraubung mit der Eingangswelle des Hinterachsgetriebes verschraubt. Üblicherweise weist die Flanschverschraubung drei oder mehr über den Umfang verteilt angeordnete Schrauben auf, was bei der Montage mit erheblichen Montageaufwand verbunden ist.

Aufgabe der Erfindung ist es, eine Antriebsstrangverbindung zu schaffen, die eine kompakte Bauweise aufweist und die mit geringem Aufwand montierbar und demontierbar ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einer Antriebsstrangverbindung für Fahrzeuge aus, bei der eine Gelenkwelle über ein Gelenk mit einer Getriebewelle drehgekoppelt ist. Bei der Getriebewelle kann es sich zum Beispiel um eine Eingangswelle eines Achsgetriebes handeln. "Drehgekoppelt" kann in diesem Zusammenhang bedeuten, dass ein getriebeseitiges Gelenkteil formschlüssig mit der Getriebewelle bzw. der Eingangswelle des Achsgetriebes verbunden ist. Der Begriff "Gelenk" ist sehr breit zu verstehen, d.h. es kann sich z.B. um ein Gleichlaufgelenk, eine Gelenkscheibe, ein Kreuzgelenk oder um einen anderen Gelenktyp handeln.

Der Kern der Erfindung besteht darin, dass das getriebeseitige Gelenkteil über eine koaxial zur Getriebewelle angeordnete Spannmutter mit der Getriebewelle verbunden ist. Der Begriff "verbunden" ist in diesem Zusammenhang so zu verstehen, dass das getriebeseitige Gelenkteil über die Spannmutter mit der Getriebewelle, also nur indirekt mit der Getriebewelle verbunden ist.

Ein wesentlicher Vorteil der Erfindung gegenüber dem Stand der Technik besteht darin, dass bei der Montage bzw. Demontage lediglich eine einzige Spannmutter angezogen bzw. gelöst werden muss. Bei angehobenem Fahrzeug kann die Spannmutter bequem von unten mit einem Gabelschlüssel angezogen bzw. gelöst werden.

Noch der Erfindung ist eine Wellenmutter auf die Getriebewelle aufgeschraubt und über die Spannmutter mit dem getriebeseitigen Gelenkteil verbunden.

Die Spannmutter kann als Überwurfmutter ausgebildet sein, die im gelösten Zustand drehbar auf der Wellenmutter angeordnet ist. Vorzugsweise weist die Wellenmutter auf einer dem Gelenk zugewandten Seite einen Bund auf. In der Spannmutter ist dann eine Nut vorgesehen, welche den Bund hintergreift. Die Spannmutter ist somit über den Bund in Längsrichtung der Getriebewelle formschlüssig mit der Spannmutter verbunden.

Der Begriff Überwurfmutter ist sehr breit zu verstehen. Er umfasst auch solche Muttern, wie sie z.B. aus der Installationstechnik bekannt sind, wobei ganz allgemein gesprochen die Mutter in Axialrichtung formschlüssig, z.B. über einen Absatz und eine den Absatz hintergreifende Nase bzw. einen den Absatz hintergreifenden Bund mit der Getriebewelle oder einem mit der Getriebewelle verbundenen Teil verbunden ist.

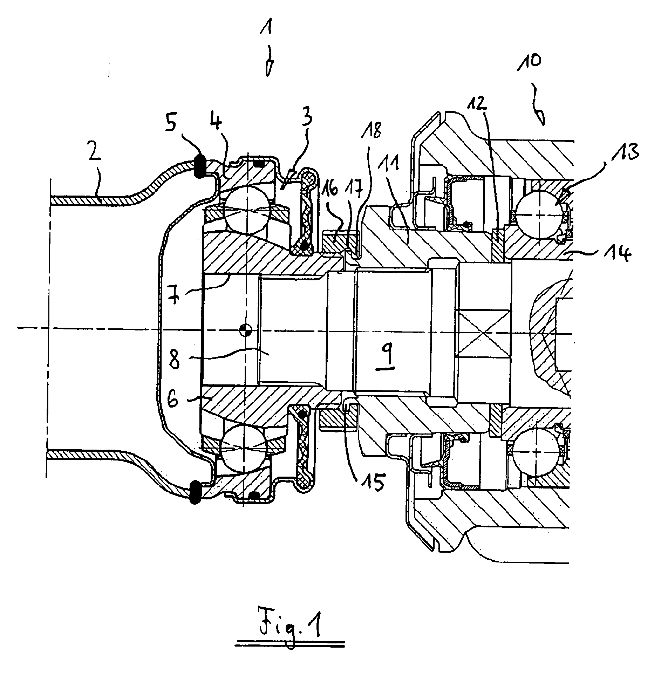

Im folgenden wir die Erfindung im Zusammenhang mit der Zeichnung näher erläutert. Die einzige **Figur 1** zeigt ein Ausführungsbeispiel mit einer Kombimutter.

**Figur 1** zeigt eine Antriebsstrangverbindung 1, bei der am Ende einer Gelenkwelle 2 ein Gleichlaufgelenk 3 angeordnet ist. Das Gleichlaufgelenk 3 weist ein erstes Gelenkteil 4 auf, das mit der Gelenkwelle 2 über eine Schweißnaht 5 verschweißt ist. Ein zweites Gelenkteil 6 des Gleichlaufgelenks 3 ist hohl und weist an seiner Innenseite ein Kerbzahnprofil 7 auf. In das zweite Gelenkteil 6 ist ein Wellenzapfen 8 eingeschoben, der über das Kerbzahnprofil 7 mit dem zweiten Gelenkteil 6 drehgekoppelt ist. Der Wellenzapfen 8 bildet das Ende einer Eingangswelle 9 eines Hinterachsgetriebes 10.

Auf die Eingangswelle 9 des Hinterachsgetriebes 10 ist eine Wellenmutter 11 aufgeschraubt. Die Wellenmutter 11 spannt über eine Unterlegscheibe 12 ein Schrägkugellager 13 vor, dessen Innenring 14 auf der Eingangswelle 9 sitzt. Die Wellenmutter 11 weist einen umlaufenden Bund 15 auf. Eine Spannmutter 16, welche von außen auf das zweite Gelenkteil 6 aufgeschraubt ist, weist eine nutartige Ausnehmung 17 mit einem Hinterschnitt 18 auf, welcher den Bund 15 der Wellenmutter 11 übergreift. Die Spannmutter 16 kann also als Überwurfmutter bezeichnet sein, die im gelösten Zustand drehbar auf der Wellenmutter 11 sitzt.

Bei der Montage braucht lediglich die Eingangswelle 9 bzw. der Wellenzapfen 8 der Eingangswelle 9 in das zweite Gelenkteil 6 eingeschoben und die Spannmutter 16 zum Beispiel mit einem Gabelschlüssel angezogen werden.

## Patentansprüche

1. Antriebsstrangverbindung (1) für Fahrzeuge, mit
einer Gelenkwelle (2), die über ein Gelenk (3) mit einer Getriebewelle (9) drehgekoppelt ist, wobei ein getriebeseitiges Gelenkteil (6) mit der Getriebewelle (9) drehgekoppelt ist, wobei
das getriebeseitige Gelenkteil (6) über eine koaxial zur Getriebewelle (9) angeordnete Spannmutter (16) mit der Getriebewelle (9) verbunden ist,
**dadurch gekennzeichnet, dass**
auf die Getriebewelle (9) eine Wellenmutter (11) aufgeschraubt ist, und das getriebeseitige Gelenkteil (6) über die Spannmutter (16) mit der Wellenmutter (11) verbunden ist.

2. Antriebsstrangverbindung (1) nach Anspruch 1, wobei die Spannmutter (16) eine Überwurfmutter ist, die im gelösten Zustand drehbar auf der Wellenmutter (11) ist.

3. Antriebsstrangverbindung (1) nach einem der Ansprüche 1 oder 2, wobei die Wellenmutter (11) auf einer dem Gelenk (3) zugewandten Seite einen Bund (15) aufweist, welchen die Spannmutter (16) hintergreift, wobei die Spannmutter (16) über den Bund (15) in Längsrichtung der Getriebewelle (9) formschlüssig mit der Wellenmutter (11) verbunden ist.

4. Antriebsstrangverbindung (1) nach Anspruch 3, wobei der Bund ein umlaufender Bund ist.

5. Antriebsstrangverbindung (1) nach einem der Ansprüche 1 bis 4, wobei das Gelenk (3) ein Gleichlaufgelenk ist.

6. Antriebsstrangverbindung (1) nach einem der Ansprüche 1 bis 5, wobei die Getriebewelle (9) Bestandteil eines Achsgetriebes (10) ist.

7. Antriebsstrangverbindung (1) nach Anspruch 6, wobei die Getriebewelle (9) eine Eingangswelle des Achsgetriebes (10) ist.

8. Antriebsstrangverbindung (1) nach einem der Ansprüche 6 oder 7, wobei das Achsgetriebe (10) ein Hinterachsgetriebe ist.

9. Antriebsstrangverbindung (1) nach einem der Ansprüche 1 bis 8, wobei das getriebeseitige Gelenkteil (6) formschlüssig mit der Getriebewelle (9) drehgekoppelt ist.

## Claims

1. A line-of-drive connection (1) for motor vehicles, comprising
a universal-joint propeller shaft (2) connected in rotation by a joint (3) to a gear shaft (9), wherein a part (6) of the joint on the gear side is coupled in rotation to the gear shaft (9), wherein
the part (6) of the joint on the gear side is connected to the gear shaft (9) by a clamping nut (1 6) coaxial with the gear shaft (9),
**characterised in that**
a shaft nut (11) is screwed on to the gear shaft (9) and the part (6) is connected to the shaft nut (11) by the clamping nut (16).

2. A line-of-drive connection (1) according to claim 1, wherein the clamping nut (16) is a cap nut which when loosened is rotatable on the shaft nut (11).

3. A line-of-drive connection (1) according to claim 1 or claim 2, wherein the shaft nut (11), on a side facing the joint (3), has a collar (15) which grips behind the clamping nut (16), wherein the clamping nut (16) is positively connected to the shaft nut (11) by the collar (15) in the longitudinal direction of the gear shaft (9).

4. A line-of-drive connection (1) according to claim 3, wherein the collar is a peripheral collar.

5. A line-of-drive connection (1) according to any of claims 1 to 4, wherein the joint (3) is a homokinetic joint.

6. A line-of-drive connection (1) according to any of claims 1 to 5, wherein the gear shaft (9) is a component of an axle drive (10).

7. A line-of-drive connection (1) according to claim 6, wherein the gear shaft (9) is an input shaft of the axle drive (10).

8. A line-of-drive connection (1) according to claim 6 or claim 7, wherein the axle drive (10) is a rear-axle drive.

9. A line-of-drive connection (1) according to any of claims 1 to 8, wherein the part (6) of the joint on the gear side is positively connected in rotation to the gear shaft (9).

## Revendications

1. Ligne de transmission (1) de véhicule automobile comportant un arbre articulé (2) relié par une articulation (3) à un arbre de transmission (9) par un couplage en rotation,
la partie d'articulation (6) côté transmission est couplée en rotation à l'arbre de transmission (9), et
la partie d'arbre (6) côté transmission est reliée à l'arbre de transmission (9) par un écrou de serrage (16) coaxial à l'arbre de transmission (9),
**caractérisée en ce que**
un écrou d'arbre (11) est vissé sur l'arbre de transmission (9) et la partie d'articulation (6) coté transmission est reliée à l'écrou d'arbre (11) par l'écrou de serrage (16).

2. Ligne de transmission (1) selon la revendication 1,
dans laquelle
l'écrou de serrage (16) est un écrou chapeau qui, à l'état desserré, tourne sur l'écrou d'arbre (11).

3. Liaison de transmission (1) selon une des revendications 1 ou 2,
dans laquelle
l'écrou d'arbre (11) comporte une collerette (15) sur son coté tourné vers l'articulation (3), une collerette (15) qui vient prendre dans l'écrou de serrage (16),
l'écrou de serrage (16) est relié à l'écrou d'arbre (11) par la collerette (15), par une liaison de forme dans la direction longitudinale de l'arbre de transmission (9).

4. Ligne de transmission (1) selon la revendication 3,
dans laquelle
la collerette (15) est une collerette périphérique.

5. Ligne de transmission (1) selon l'une des revendications 1 à 4,
dans laquelle
l'articulation (3) est une articulation synchrone.

6. Ligne de transmission (1) selon l'une des revendications 1 à 5,
dans laquelle
l'arbre de transmission (9) fait partie d'une transmission d'essieu (10).

7. Ligne de transmission (1) selon la revendication 6,
dans laquelle
l'arbre de transmission (9) est l'arbre d'entrée de la transmission d'essieu (10).

8. Ligne de transmission (1) selon l'une des revendications 6 ou 7,
dans laquelle
la transmission d'essieu (10) est la transmission d'essieu arrière.

9. Ligne de transmission (1) selon l'une des revendications 1 à 8,
dans laquelle
la pièce d'articulation (6) côté transmission est couplée en rotation par une liaison par la forme à l'arbre de transmission (9).
